# EUROPÄISCHE PATENTSCHRIFT

(11) **EP 3 182 582 B1**
(45) Veröffentlichungstag und Bekanntmachung des Hinweises auf die Patenterteilung: **06.02.2019**
(21) Anmeldenummer: 15200094.9
(22) Anmeldetag: 15.12.2015
(51) Int. Cl.: H02S 50/15

(54) **VERFAHREN UND VORRICHTUNG ZUR PRÜFUNG VON SOLARZELLEN ODER SOLARMODULEN AUF ALTERUNGSBESTÄNDIGKEIT**
METHOD AND DEVICE FOR TESTING SOLAR CELLS OR SOLAR MODULES FOR AGEING RESISTANCE
PROCEDE ET DISPOSITIF DE CONTROLE DE LA RESISTANCE AU VIEILLISSEMENT DE CELLULES SOLAIRES OU DE PANNEAUX SOLAIRES

(43) Veröffentlichungstag der Anmeldung: 21.06.2017
(73) Patentinhaber: Fraunhofer-Gesellschaft zur Förderung der angewandten Forschung e.V., 80686 München (DE)
(72) Erfinder: Turek, Marko, 06108 Halle (DE); Hagendorf, Christian, 06108 Halle (Saale) (DE); Luka, Tabea, 06114 Halle (DE)
(74) Vertreter: Gagel, Roland

(56) Entgegenhaltungen:
- WO-A1-2013/170422
- DE-A1-102011 112 100
- DE-U1-202005 010 562
- US-A1- 2010 073 011
- US-A1- 2013 134 885

## Beschreibung

### Technisches Anwendungsgebiet

Die vorliegende Erfindung betrifft ein Verfahren sowie eine Vorrichtung zur Prüfung von Solarzellen oder Solarmodulen, bei dem die Solarzellen oder Solarmodule in einer Prüfkammer in einer oder mehreren aufeinander folgenden Alterungsphasen durch externe Einwirkung einer beschleunigten Alterung unterzogen werden und eine Messung wenigstens eines Parameters der Solarzellen oder Solarmodule in der Prüfkammer durchgeführt wird, an dem eine Alterung der Solarzellen oder Solarmodule oder eines Bestandteils der Solarzellen oder Solarmodule quantifizierbar ist. Das Dokument US2010/073011A beschreibt ein Verfahren zur Prüfung von Solarzellen.

Bei der Entwicklung neuer Solarzellenkonzepte oder neuer Herstellungsprozesse müssen die Solarzellen nicht nur hinsichtlich ihrer Leistung direkt nach dem Produktionsprozess bewertet werden, sondern auch bezüglich einer möglichen Degradation unter Lichteinfall, erhöhter Temperatur oder Strombelastung. So gibt es eine Vielzahl von bereits bekannten Degradationserscheinungen, bspw. aufgrund von B-O-Paar-Aktivierung, Fe-B-Paar-Dissoziation oder lichtinduzierter Degradation in PERC-Silizium-Solarzellen. Für eine Prüfung auf Anfälligkeit gegenüber derartigen Degradationserscheinungen müssen die Solarzellen einem geeigneten Test unterzogen werden.

### Stand der Technik

Für die Prüfung von Solarzellen auf Alterungsbeständigkeit bzw. auf Anfälligkeit für bekannte Degradationserscheinungen ist es bekannt, die Solarzellen oder Solarmodule durch eine Halogen- oder Xenonbeleuchtung einer Lichtexposition auszusetzen, während sie zusätzlich erwärmt oder bestromt werden. Anschließend werden elektrische Eigenschaften der auf diese Weise behandelten Solarzellen gemessen, aus denen die Anfälligkeit der getesteten Solarzellen für alterungsbedingte Degradation bestimmt werden kann. Die US 2010/0073011 A1 beschreibt bspw. eine derartige Vorgehensweise sowie eine dafür geeignete Vorrichtung.

Bei diesen Systemen erfolgt jedoch auch immer ein großer Wärmeeintrag in die zu prüfenden Solarzellen aufgrund der Beleuchtung und des darin enthaltenen hohen Anteils an IR-Strahlung. Darüber hinaus ist die Lichtintensität nur in kleinem Umfang oder nur mit großem konstruktiven Aufwand, bspw. mittels Gitterabdunkelungen, einstellbar. Eine weitere Problematik dieser bekannten Vorgehensweise besteht darin, dass Frühindikatoren für die alterungsbedingte Degradation in vielen Fällen nur sehr ungenau oder gar nicht bestimmt werden können.

Weiterhin sind Testsysteme für Solarzellen bekannt, die zur Messung der Leistung von Solarzellen nach deren Herstellung eingesetzt werden, um die Einhaltung der Spezifikationen zu überprüfen. Bei diesen Testsystemen geht es nicht um die Prüfung auf Anfälligkeit für alterungsbedingte Degradation, sondern um die Prüfung der Leistung der Solarzellen allgemein. So ist bspw. aus der US 2013/0134885 A1 ein Testsystem sowie ein Verfahren zur Prüfung bekannt, bei dem die Solarzellen mit Hilfe einer LED-Beleuchtungseinrichtung beleuchtet und die resultierende Leistung der Solarzelle gemessen wird. Die LED-Beleuchtungseinrichtung ist hierbei als flächige Lichtquelle ausgebildet und weist eine Vielzahl von LEDs auf, die bei unterschiedlichen Wellenlängen emittieren. Die LEDs werden dabei so angesteuert, dass ein möglichst sonnenlichtähnliches Spektrum mit der Beleuchtungseinrichtung erzielt wird.

Die Aufgabe der vorliegenden Erfindung besteht darin, ein Verfahren und eine Vorrichtung zur Prüfung von Solarzellen oder Solarmodulen auf Alterungsbeständigkeit anzugeben, mit denen Frühindikatoren für eine alterungsbedingte Degradation mit hoher Sensitivität bestimmt werden können.

### Darstellung der Erfindung

Die Aufgabe wird mit dem Verfahren und der Vorrichtung gemäß den Patentansprüchen 1 und 11 gelöst. Vorteilhafte Ausgestaltungen des Verfahrens sowie der Vorrichtung sind Gegenstand der abhängigen Patentansprüche oder lassen sich der nachfolgenden Beschreibung sowie dem Ausführungsbeispiel entnehmen.

Bei dem vorgeschlagenen Verfahren werden die Solarzellen oder Solarmodule entweder noch während der Herstellung, bspw. noch in Form des Wafers, oder nach der Herstellung in einer Prüfkammer in einer oder mehreren aufeinanderfolgenden Alterungsphasen durch externe Einwirkung einer beschleunigten Alterung unterzogen. In einer oder mehreren Messphasen, die zwischen den und/oder am Ende der Alterungsphasen liegen, wird eine Messung wenigstens eines Parameters der Solarzellen oder Solarmodule in der Prüfkammer durchgeführt, an dem eine Alterung der Solarzellen oder Solarmodule oder eines Bestandteils der Solarzellen oder Solarmodule quantifizierbar ist. Bei diesem Bestandteil kann es sich beispielsweise auch um die Einbettfolie oder um die Glasabdeckung mit der Antireflexbeschichtung handeln. Die Solarzellen oder Solarmodule werden dabei während der einen oder mehreren Messphasen nur mit optischer Strahlung eines oder mehrerer ersten Wellenlängenbereiche bestrahlt, die gegenüber einem sensitiven Wellenlängenbereich der Solarzellen oder Solarmodule eingeschränkt sind und bei denen ein interessierender Alterungseffekt der Solarzellen oder Solarmodule oder des Bestandteils der Solarzellen oder Solarmodule anhand des gemessenen Parameters mit höchster Sensitivität nachweisbar ist. Unter dem sensitiven Wellenlängenbereich ist dabei der Wellenlängenbereich zu verstehen, für den die Solarzellen oder Solarmodule ausgelegt sind, also bei Bestrahlung Strom liefern.

Hierbei wurde erkannt, dass Frühindikatoren für die Alterungsanfälligkeit oder Alterungsbeständigkeit bei Beleuchtung mit einem geeignet (gegenüber dem sensitiven Wellenlängenbereich) eingeschränkten Wellenlängenbereich in der Messphase, in der vorliegenden Patentanmeldung auch als erster Wellenlängenbereich bezeichnet, mit höherer Sensitivität bestimmt werden können. Die Lage und Breite dieses (ersten) Wellenlängenbereiches muss dabei auf den jeweiligen Solarzellentyp abgestimmt werden. Auch die Messung bei mehreren (ersten) Wellenlängenbereichen, die jedoch in Summe noch immer nicht den sensitiven Wellenlängenbereich vollständig abdecken, sind möglich, beispielsweise um unterschiedliche Frühindikatoren zu erfassen. Die optimale Lage und Breite des ersten Wellenlängenbereiches - oder der ersten Wellenlängenbereiche - für die Bestimmung der Frühindikatoren können dabei im Vorfeld ermittelt werden. Durch diese Maßnahme der Beleuchtung mit einem oder mehreren vorher ermittelten, eingeschränkten Wellenlängenbereich(en) können damit Frühindikatoren wesentlich besser erfasst werden, aus denen bspw. die Anfälligkeit für alterungsbedingte Degradation ermittelt werden kann. Die Beleuchtung erfolgt dabei mit Hilfe einer LED-Beleuchtungseinheit, die als flächige Lichtquelle, d.h. als Array von LEDs, für eine homogene Beleuchtung der Solarzellen oder Solarmodule ausgebildet ist. Vorzugsweise umfasst diese Beleuchtungseinheit eine Vielzahl von LEDs, die mit unterschiedlichen Wellenlängen emittieren, um damit durch Ansteuerung einzelner Gruppen von LEDs je nach zu testender Solarzelle oder zu testendem Solarmodul den für die Bestimmung der Frühindikatoren jeweils optimalen Wellenlängenbereich nutzen zu können.

Die beschleunigte Alterung der zu prüfenden Solarzellen oder Solarmodule in den Alterungsphasen kann in unterschiedlicher Weise durchgeführt werden, wie dies auch bereits aus dem Stand der Technik bekannt ist. Dies kann bspw. durch Beleuchtung der Solarzellen mit im Vergleich zu Sonneneinstrahlung erhöhter Intensität, durch Erwärmung der Solarzellen oder auch durch zusätzliche Bestromung der Solarzellen oder einer beliebigen Kombination dieser Maßnahmen erfolgen.

In einer vorteilhaften Ausgestaltung werden die Solarzellen bei der beschleunigten Alterung mit Licht eines oder mehrerer Wellenlängenbereiche beleuchtet, der oder die gegenüber dem sensitiven Wellenlängenbereich der Solarzellen oder Solarmodule eingeschränkt sind und mit denen eine maximale Beschleunigung des Alterungsprozesses der Solarzellen oder Solarmodule oder des zu untersuchenden Bestandteils der Solarzellen oder Solarmodule erreicht wird. Dabei kann es sich bspw. um einen Wellenlängenbereich im Ultravioletten handeln. Die beschleunigte Alterung kann hierbei durch Bestrahlung mit einer erhöhten Intensität oder auch durch Bestrahlung mit einer der Sonneneinstrahlung angenäherten Intensität und gleichzeitige Erwärmung der Solarzellen oder Solarmodule erfolgen. Diese gezielte Erwärmung kann bspw. mittels Infrarotbestrahlung, durch Umströmung mit temperierter Luft oder mittels planarer Heizelemente oder Peltierelemente erfolgen, die bspw. in den Aufnahmeträger für die Solarzellen oder Solarmodule in der Prüfkammer integriert sein können.

Als Parameter für die Quantifizierung der Alterung der Solarzellen oder Solarmodule kann bspw. der Kurzschlussstrom der Solarzellen in den Messphasen gemessen werden. Dies kann auch bei unterschiedlicher Intensität der Bestrahlung erfolgen, um dadurch einen intensitätsabhängigen Kurzschlussstrom zu erfassen. Ein weiteres Beispiel besteht in der Nutzung eines bildgebenden Verfahrens, bei dem die Oberfläche der Solarzellen in den Messphasen mit einer Kamera erfasst wird, um aus der Elektro- oder Photolumineszenz den Grad der Anfälligkeit für alterungsbedingte Degradation abzuleiten.

In einer bevorzugten Ausgestaltung werden die Solarzellen während der einen oder mehreren Messphasen mit optischer Strahlung einer spektralen Breite von ≤ 200 nm als erstem Wellenlängenbereich bestrahlt. Vorzugsweise liegt dieser Wellenlängenbereich im Bereich zwischen 800 und 1100 nm.

Die vorgeschlagene Vorrichtung zur Prüfung der Solarzellen umfasst entsprechend eine Prüfkammer mit einer LED-Beleuchtungseinrichtung zur homogenen Beleuchtung von in die Prüfkammer eingebrachten Solarzellen oder Solarmodulen und einer regelbaren Temperiereinrichtung zur homogenen Erwärmung oder Abkühlung der Solarzellen bzw. Solarmodule. Die LED-Beleuchtungseinrichtung ist dabei als flächige Lichtquelle ausgebildet und weist eine Vielzahl von LEDs mit unterschiedlichen Wellenlängen auf, die in wenigstens zwei Gruppen von LEDs ansteuerbar sind. Die erste Gruppe emittiert dabei Licht eines breiteren Wellenlängenbereiches als die zweite Gruppe. Vorzugsweise lassen sich hierbei beliebige Gruppen bilden und entsprechend ansteuern, um dadurch Licht in unterschiedlichen Wellenlängenbereichen und mit unterschiedlichen Breiten der Wellenlängenbereiche erzeugen zu können. Die Vorrichtung umfasst weiterhin eine Messeinrichtung, die auch eine Stromquelle und/oder -senke für die Solarzellen aufweist und zur Messung wenigstens eines Parameters der Solarzellen oder Solarmodule ausgebildet ist, an dem eine Alterung wenigstens eines Bestandteils der Solarzellen oder Solarmodule quantifizierbar ist, sowie eine Steuereinrichtung für die LED-Beleuchtungseinrichtung, die Temperiereinrichtung und die Messeinrichtung. Die Steuereinrichtung ist dabei so ausgebildet, dass sie die LED-Beleuchtungseinrichtung, die Temperiereinrichtung und die Messeinrichtung jeweils zur Durchführung der Alterungs- und Messphasen des vorgeschlagenen Verfahrens ansteuert.

Die erste Gruppe von LEDs ist bei der vorgeschlagenen Vorrichtung vorzugsweise so gewählt, dass sie Licht eines Wellenlängenbereiches emittiert, der eine beschleunigte Alterung der Solarzellen oder Solarmodule begünstigt. Vorzugsweise emittiert diese Gruppe Licht eines Wellenlängenbereiches von wenigstens 500 - 1000 nm. Die zweite Gruppe der LEDs ist so gewählt, dass sie einen gegenüber dem sensitiven Wellenlängenbereich der Solarzellen eingeschränkten Wellenlängenbereich emittiert, bei dem die Bestimmung der Frühindikatoren mit einer hohen Sensitivität möglich ist.

Die vorgeschlagene Vorrichtung ermöglicht damit, alterungsbedingte Degradationen von Solarzellen oder Solarmodulen hinsichtlich der drei unabhängigen Parameter Lichtintensität, Temperatur und Stromeintrag zu quantifizieren, wobei alle drei Einflussgrößen unabhängig voneinander und über einen großen Parameterbereich frei einstellbar sind, bzw. die Einstellung wohl definierter Abfolgen dieser Einflussgrößen möglich ist.

Das vorgeschlagene Verfahren ermöglicht die Bestimmung von Frühindikatoren mit hoher Sensitivität. Das Verfahren und die Vorrichtung eignen sich dabei sowohl für einzelne Solarzellen als auch für Solarzellen in kompletten Modulen oder auch für Solarzellen auf Waferbasis und in Minimodulprüfkörpern. Die Verwendung einer LED-Beleuchtungseinheit ermöglicht die Anpassung des Beleuchtungsspektrums in der Art, dass der Wärmeeintrag auf die Solarzellen durch die Beleuchtung minimiert wird. Insbesondere können dadurch intrinsische Thermalisierungseffekte ebenso reduziert werden wie eine Erwärmung durch einen hohen Infrarot-Anteil des Lichtes. Eine Temperierung mittels Peltier-elementen oder Luft vorgegebener Temperatur ermöglicht sowohl eine Kühlung als auch eine Erwärmung der Solarzellen. Durch die Verwendung vieler einzelner LEDs, welche flächig angeordnet sind, ist eine großflächige und räumlich homogene Beleuchtung möglich. Dadurch wird gewährleistet, dass alle Teile des jeweiligen Prüfkörpers mit der gleichen Lichtintensität beleuchtet werden. Darüber hinaus bietet diese Umsetzung den Vorteil, dass der Testaufbau modular aufgebaut und damit beliebig auf größere Prüfkörper skalierbar ist.

Die Verwendung von LED-Lichtquellen in Kombination mit Peltier-Elementen oder der Umströmung mit temperierter Luft ermöglicht eine sehr flexible und automatisch geregelte Anpassung der Versuchsparameter an vorgegebene Messrezepte. Dadurch können einerseits natürliche Umweltbedingungen nachgestellt und andererseits Schnelltests mit wechselnden Abfolgen von Beleuchtung und Erwärmung/Abkühlung automatisiert werden.

Das Fortschreiten der Degradation wird durch spezielle Messparameter quantifiziert, welche sich bereits frühzeitig während einer Degradation ändern. Dazu zählt die Messung elektrischer Leistungskennwerte unter Beleuchtung bei ausgewählten Wellenlängen ebenso wie die Verwendung bildgebender Verfahren, um lokale Veränderungen frühzeitig zu erkennen. Damit können sehr schnell anfällige Solarzellen von weniger anfälligen Zellen unterschieden werden.

Mit dem Verfahren und der Vorrichtung können Solarzellen oder Solarmodule in der Produktion auf ihre Qualität und Alterungsanfälligkeit hin überprüft werden. Das Verfahren und die Vorrichtung lassen sich auch in der Forschung und Entwicklung neuer Solarzellentechnologien oder neuer Photovoltaik-Modulprodukte einsetzen.

### Kurze Beschreibung der Zeichnungen

Die vorgeschlagene Vorrichtung wird nachfolgend anhand eines Beispiels in Verbindung mit der Figur nochmals näher erläutert. Hierbei zeigt:

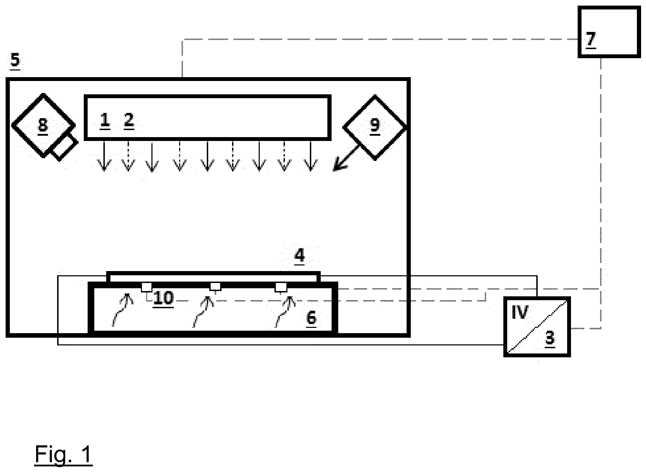

Fig. 1 eine schematische Darstellung eines Beispiels der vorgeschlagenen Vorrichtung.

### Wege zur Ausführung der Erfindung

Figur 1 zeigt beispielhaft in schematischer Darstellung den Aufbau einer Vorrichtung zur Prüfung von Solarzellen oder Solarmodulen gemäß der vorliegenden Erfindung. Der dargestellte Aufbau basiert auf der Kombination einer LED-Beleuchtungseinheit und einer davon unabhängigen Erwärmung der Prüfkörper. Die in der Prüfkammer 5 angeordnete LED-Beleuchtungseinrichtung ist dabei als flächige Lichtquelle ausgebildet, um ein räumlich homogenes Lichtfeld zu erzeugen. Die LED-Beleuchtungseinrichtung umfasst mindestens zwei Gruppen von LEDs. Eine erste Gruppe 1 ist hinsichtlich ihres Wellenlängenbereiches auf einen möglichst großen Alterungseffekt der Solarzellen ausgelegt, während die zweite Gruppe 2 hinsichtlich ihres Wellenlängenbereiches zum Vermessen eines Frühindikators für Alterungseffekte der Solarzellen hin optimiert ist. Der Wellenlängenbereich der ersten Gruppe 1 kann in Abhängigkeit vom Solarzellenmaterial in einem mittleren Wellenlängenbereich liegen. Zu kurze Wellenlängen führen zu internen Thermalisierungsprozessen in der Solarzelle und damit zu einer mit der Beleuchtung verbundenen Erwärmung. Zu lange Wellenlängen im Infrarotbereich führen zu einer Erwärmung durch Wärmestrahlung. Für Silizium-Solarzellen und Silizium-Module haben sich hierbei Wellenlängen zwischen 500 nm und 1000 nm für die erste Gruppe als geeignet herausgestellt. Diese erste Gruppe 1 von LEDs kann auch mehr als eine Sorte LEDs, d.h. LEDs mit unterschiedlichen Emissionswellenlängen, enthalten und somit einen breiteren Wellenlängenbereich abdecken. Die Regelung der LEDs erfolgt über eine Steuereinheit 7, so dass sich auch beliebige Abfolgen unterschiedlicher Intensitäten einstellen lassen.

Die zweite Gruppe 2 von LEDs dient in diesem Beispiel der Messung der elektrischen Parameter der Solarzelle in den Messphasen. Diese LEDs sind dabei so angeordnet, dass sie ebenfalls eine flächige Lichtquelle darstellen, z.B. durch alternierende Anordnung mit den LEDs der ersten Gruppe 1. Die LEDs der zweiten Gruppe 2 sind so gewählt, dass sie in einem Wellenlängenbereich emittieren, bei dem die durch Bestrahlung mit der zweiten Gruppe 2 resultierenden elektrischen Kennwerte der Solarzelle eine maximale Sensitivität hinsichtlich der untersuchten Alterungsprozesse zeigen. So hat sich für die lichtinduzierte Degradation an PERC-Solarzellen ein Wellenlängenbereich innerhalb des Bereichs von 800 nm bis 1100 nm als geeignet herausgestellt. Die zweite Gruppe 2 kann hierbei auch wiederum mehrere Sorten von LEDs enthalten und somit auf Frühindikatoren für verschiedene Alterungsprozesse angepasst werden.

Die Steuerungseinheit 7 steuert dabei die beiden Gruppen von LEDs so an, dass sich jeweils eine Alterungsphase und eine Messphase abwechseln. In der Messphase werden während der Beleuchtung mit der zweiten Gruppe 2 von LEDs die elektrischen Parameter der Solarzelle gemessen, aus denen die Frühindikatoren bestimmt werden können. Als elektrische Parameter kommen bspw. die Messung von Kurzschlussströmen oder die I-V-Charakteristik in Frage. Alternativ oder zusätzlich kann als Frühindikator die Messung von elektro-optischen Kennwerten wie der Elektrolumineszenz oder der Photolumineszenz dienen. Diese Messgrößen sind besonders sensitiv auf eine Änderung in der Leerlaufspannung von Solarzellen und damit als Frühindikator ebenfalls gut geeignet. Zugleich geben sie ortsaufgelöste Informationen über die Alterung der Solarzellen. Für eine derartige bildgebende Messung kann eine Kamera 8 eingesetzt werden, die in der Figur 1 ebenfalls in der Prüfkammer 5 angedeutet ist.

Die Erwärmung der Solarzellen für eine beschleunigte Alterung kann entweder über einen großflächigen Wärmekontakt 6, z.B. durch planare Heizelemente, Peltierelemente, durch eine Umströmung mit Luft vorgegebener Temperatur oder durch eine zusätzliche Beleuchtung mit Infrarotstrahlern 9 erfolgen. Die Heiz- und Kühlelemente sind dabei regelbar ausgeführt, werden über Temperatursensoren 10 überwacht und mit Hilfe der Steuereinheit 7 gesteuert.

Darüber hinaus ist in diesem Beispiel vorgesehen, den Prüfkörper 4 (Solarzelle) durch eine Stromquelle oder -senke 3 in einen bestimmten, wohl-definierten elektrischen Betriebspunkt zu versetzen. Diese elektrische Kontaktierung wird auch genutzt, um die elektrischen Messungen, wie bspw. die I-V-Charakteristik während der Messphasen zu messen. Die Stromquelle und -senke 3 ist ebenfalls mit der Steuereinheit 7 verbunden. Optional kann die Stromquelle zur Provozierung von verwandten Degradationseffekten durch die Injektion von Minoritäts-Ladungsträgern über Bestromung in der Solarzelle oder im Solarmodul eingesetzt werden.

### Bezugszeichenliste

- 1: erste Gruppe von LEDs
- 2: zweite Gruppe von LEDs
- 3: Stromquelle/-senke
- 4: Solarzelle bzw. Prüfkörper
- 5: Prüfkammer
- 6: Wärmekontakt
- 7: Steuereinheit
- 8: Kamera
- 9: IR-Strahler
- 10: Temperatursensoren

## Patentansprüche

1. Verfahren zur Prüfung von Solarzellen oder Solarmodulen während oder nach deren Herstellung, bei dem
- die Solarzellen (4) oder Solarmodule in einer Prüfkammer (5) in einer oder mehreren aufeinander folgenden Alterungsphasen durch externe Einwirkung einer beschleunigten Alterung unterzogen werden und
- in einer oder mehreren Messphasen, die zwischen den und/oder am Ende der Alterungsphasen liegen, eine Messung wenigstens eines Parameters der Solarzellen (4) oder Solarmodule in der Prüfkammer (5) durchgeführt wird, an dem eine Alterung der Solarzellen (4) oder Solarmodule oder eines Bestandteils der Solarzellen (4) oder Solarmodule quantifizierbar ist,
- wobei die Solarzellen (4) oder Solarmodule während der einen oder mehreren Messphasen nur mit optischer Strahlung eines oder mehrerer ersten Wellenlängenbereiche einer spektralen Breite von ≤ 200 nm bestrahlt werden, die gegenüber einem sensitiven Wellenlängenbereich der Solarzellen (4) oder Solarmodule eingeschränkt sind und bei denen ein interessierender Alterungseffekt der Solarzellen (4) oder Solarmodule oder des Bestandteils der Solarzellen (4) oder Solarmodule anhand des gemessenen Parameters mit höchster Sensitivität nachweisbar ist.

2. Verfahren nach Anspruch 1, **dadurch gekennzeichnet,**
**dass** eine spektrale Lage des ersten Wellenlängenbereiches oder der ersten Wellenlängenbereiche vorab durch Versuche ermittelt wird.

3. Verfahren nach einem der Ansprüche 1 bis 2, **dadurch gekennzeichnet,**
**dass** die beschleunigte Alterung durch optische Bestrahlung und/oder gezielte Erwärmung und/oder gezielte Bestromung der Solarzellen oder Solarmodule während der Alterungsphasen erfolgt.

4. Verfahren nach Anspruch 3, **dadurch gekennzeichnet,**
**dass** die optische Bestrahlung der Solarzellen oder Solarmodule zur beschleunigten Alterung nur mit Licht eines oder mehrerer Wellenlängenbereiche erfolgt, die gegenüber einem sensitiven Wellenlängenbereich der Solarzellen (4) oder Solarmodule eingeschränkt sind und mit denen eine maximale Beschleunigung des Alterungsprozesses der Solarzellen (4) oder Solarmodule oder des Bestandteils der Solarzellen (4) oder Solarmodule erreicht wird.

5. Verfahren nach Anspruch 3 oder 4, **dadurch gekennzeichnet,**
**dass** die optische Bestrahlung der Solarzellen (4) oder Solarmodule zur beschleunigten Alterung in der Intensität variiert wird, um einen Einfluss der Intensität auf die Alterungsgeschwindigkeit zu untersuchen.

6. Verfahren nach einem der Ansprüche 3 bis 5, **dadurch gekennzeichnet,**
**dass** die gezielte Bestromung der Solarzellen (4) oder der Solarmodule mittels elektrischer Kontaktierung und einer regelbaren Stromquelle (3) erfolgt.

7. Verfahren nach einem der Ansprüche 3 bis 6, **dadurch gekennzeichnet,**
**dass** die gezielte Erwärmung der Solarzellen (4) oder Solarmodule mittels Infrarotbestrahlung und/oder durch Umströmung mit temperierter Luft und/oder mittels planarer Heizelemente oder Peltier-Elemente erfolgt.

8. Verfahren nach einem der Ansprüche 1 bis 7, **dadurch gekennzeichnet,**
**dass** die optische Bestrahlung der Solarzellen (4) oder Solarmodule während der einen oder mehreren Messphasen mit LEDs erfolgt.

9. Verfahren nach einem der Ansprüche 1 bis 8, **dadurch gekennzeichnet,**
**dass** der Parameter durch ein bildgebendes Verfahren ermittelt wird, bei dem ein Bild der Oberfläche der Solarzellen (4) oder Solarmodule erfasst wird.

10. Verfahren nach einem der Ansprüche 1 bis 8,
**dadurch gekennzeichnet,**
**dass** der Parameter durch Messung eines Kurzschlussstromes der Solarzellen (4) bei wenigstens einer Intensität der optischen Bestrahlung während der einen oder mehreren Messphasen ermittelt wird.

11. Vorrichtung zur Prüfung von Solarzellen oder Solarmodulen mit dem Verfahren des Anspruchs 1, die
- eine Prüfkammer (5) mit
-- einer LED-Beleuchtungseinrichtung zur homogenen Beleuchtung von in die Prüfkammer eingebrachten Solarzellen (4) oder Solarmodulen, das als flächige Lichtquelle ausgebildet ist und LEDs mit unterschiedlichen Wellenlängen aufweist, die in wenigstens zwei Gruppen (1, 2) von LEDs ansteuerbar sind, von denen eine erste Gruppe (1) Licht eines breiteren Wellenlängenbereiches als eine zweite Gruppe (2) emittiert, und
-- einer regelbaren Temperiereinrichtung zur homogenen Erwärmung oder Abkühlung der Solarzellen (4) oder Solarmodule,
- eine Messeinrichtung, die auch eine Stromquelle und/oder -senke (3) für die Solarzellen (4) oder Solarmodule umfasst, und zur Messung wenigstens eines Parameters der Solarzellen (4) oder Solarmodule ausgebildet ist, an dem eine Alterung der Solarzellen (4) oder Solarmodule oder eines Bestandteils der Solarzellen (4) oder Solarmodule quantifizierbar ist, und
- eine Steuereinrichtung (7) für die LED-Beleuchtungseinrichtung, die Temperiereinrichtung und die Messeinrichtung aufweist,
wobei die Steuereinrichtung (7) so ausgebildet ist, dass sie die LED-Beleuchtungseinrichtung, die Temperiereinrichtung und die Messeinrichtung zur Durchführung der Alterungs- und Messphasen des Verfahrens nach einem der vorangehenden Patentansprüche ansteuert.

12. Vorrichtung nach Anspruch 11, **dadurch gekennzeichnet,**
**dass** die erste Gruppe (1) von LEDs Licht eines Wellenlängenbereiches emittiert, der eine beschleunigte Alterung der Solarzellen (4) oder Solarmodule begünstigt.

13. Vorrichtung nach Anspruch 11, **dadurch gekennzeichnet,**
**dass** die erste Gruppe (1) von LEDs Licht eines Wellenlängenbereiches von wenigstens 500 bis 1000 nm emittiert.

14. Vorrichtung nach einem der Ansprüche 11 bis 13, **dadurch gekennzeichnet,**
**dass** die zweite Gruppe (2) von LEDs Licht eines Wellenlängenbereiches emittiert, bei dem ein interessierender Alterungseffekt der Solarzellen (4) oder Solarmodule oder des Bestandteils der Solarzellen (4) oder Solarmodule anhand eines mit der Messeinrichtung gemessenen Parameters mit höchster Sensitivität nachweisbar ist.

## Claims

1. A method for testing solar cells or solar modules during or after their manufacture, in which
- the solar cells (4) or solar modules are subjected to an accelerated aging process by external influences in one or more consecutively conducted aging phases in a test chamber (5), and
- a measurement of at least one parameter of the solar cells (4) or solar modules is carried out in the test chamber (5) in one or more measurement phases which lie between and/or at the end of the aging phases, which parameter may be used to quantify an aging of the solar cells (4) or solar modules or of a component of the solar cells (4) or solar modules,
- wherein during the one or more measurement phases the solar cells (4) or solar modules are irradiated exclusively with optical radiation of one or more first wavelength ranges having a spectral width of ≤ 200 nm, which are restricted with respect to a sensitive wavelength range of the solar cells (4) or solar modules and in which an aging effect of interest of the solar cells (4) or solar modules or of the component of the solar cells (4) or solar modules can be demonstrated with extreme sensitivity using the measured parameter.

2. The method according to claim 1,
**characterized in**
**that** a spectral position of the one or more first wavelength range(s) is determined experimentally in advance.

3. The method according to either of claims 1 or 2,
**characterized in**
**that** the accelerated aging is effected by optical irradiation and/or targeted heating and/or targeted electrification of the solar cells or solar modules during the aging phases.

4. The method according to claim 3,
**characterized in**
**that** the optical irradiation of the solar cells or solar modules for accelerated aging is carried out only with light of one or more wavelength ranges which are restricted with respect to a sensitive wavelength range of the solar cells (4) or solar modules and with which a maximum acceleration of the aging effect on the solar cells (4) or solar modules or on the component of the solar cells (4) or solar modules is achieved.

5. The method according to either of claims 3 or 4,
**characterized in**
**that** the optical irradiation of the solar cells (4) or solar modules for accelerated aging is varied in intensity in order to examine the effect of intensity on the speed of aging.

6. The method according to any one of claims 3 to 5,
**characterized in**
**that** the targeted electrification of the solar cells (4) or solar modules is effected by means of electrical contacting and a controllable current source (3).

7. The method according to any one of claims 3 to 6,
**characterized in**
**that** the targeted heating of the solar cells (4) or solar modules is effected by means of infrared irradiation and/or by directing a stream of temperature-controlled air over the solar cells or modules, and/or by means of planar heating elements or Peltier elements.

8. The method according to any one of claims 1 to 7,
**characterized in**
**that** the optical irradiation of the solar cells (4) or solar modules takes place with LEDs during the one or more measurement phases.

9. The method according to any one of claims 1 to 8,
**characterized in**
**that** the parameter is determined by means of an imaging process in which an image of the surface of the solar cells (4) or solar modules is captured.

10. The method according to any one of claims 1 to 8,
**characterized in**
**that** the parameter is determined by measurement of a short-circuit current of the solar cells (4) or solar modules for at least one intensity of the optical irradiation during the one or more measurement phases.

11. A device for testing solar cells or solar modules using the method according to claim 1, which includes
- a test chamber (5) having
-- a LED lighting device for homogeneous illumination of the solar cells (4) or solar modules placed in the test chamber, which is designed as a flat light source and includes LEDs with different wavelengths, and which LEDs can be controlled in at least two groups (1, 2), of which a first group (1) emits light of a broader wavelength range than a second group (2), and
-- a controllable temperature control device for homogeneous heating or cooling of the solar cells (4) or solar modules,
- a measuring device which also comprises a current source and/or current sink (3) for the solar cells (4) or solar modules, and is designed for measuring at least one parameter of the solar cells (4) or solar modules, by means of which an aging of the solar cells (4) or solar modules or of a component of the solar cells (4) or solar modules can be quantified, and
- a control device (7) for the LED lighting device, the temperature control device and the measuring device,
wherein the control device (7) is designed in such manner that it actuates the LED lighting device, the temperature control device and the measuring device in order to conduct the aging and measurement phases of the method according to any one of the preceding patent claims.

12. The device according to claim 11,
**characterized in**
**that** the first group (1) of LEDs emits light of a wavelength range that favours an accelerated aging of the solar cells (4) or solar modules.

13. The device according to claim 11,
**characterized in**
**that** the first group (1) of LEDs emits light of a wavelength range from at least 500 to 1000 nm.

14. The device according to any one of claims 11 to 13,
**characterized in**
**that** the second group (2) of LEDs emits light of a wavelength range at which an aging effect under examination of the solar cells (4) or solar modules or of a component of the solar cells (4) or solar modules can be demonstrated with extreme sensitivity using a parameter measured with the measuring device.

## Revendications

1. Procédé de contrôle de cellules solaires ou de modules solaires pendant ou après leur fabrication, dans lequel
- les cellules solaires (4) ou les modules solaires sont soumis dans une chambre d'essai (5) dans une ou plusieurs phases d'altération qui se succèdent par action externe à une altération accélérée et
- dans une ou plusieurs phases de mesure, qui sont situés entre les phases d'altération et/ou à la fin des phases d'altération, une mesure d'au moins un paramètre des cellules solaires (4) ou des modules solaires est effectué dans la chambre d'essai (5), pendant laquelle une altération des cellules solaires (4) ou des modules solaires ou d'un composant des cellules solaires ou des modules solaires peut être quantifié,
- dans lequel les cellules solaires (4) ou les modules solaires sont irradiés pendant une ou plusieurs phases de mesure seulement avec un rayonnement optique d'une ou plusieurs premières plages de longueur d'onde d'une largeur spéciale de ≤ 200 nm, qui sont limitées par rapport à une plage de longueur d'onde sensible des cellules solaires (4) ou des modules solaires et dans lesquels un effet d'altération intéressant des cellules solaires (4) ou modules solaires ou du composant des cellules solaires (4) ou module solaires est décelable sur la base du paramètre mesuré avec une sensibilité maximale.

2. Procédé selon la revendication 1,
**caractérisé en ce**
**que** une position spectrale de la première plage de longueur d'onde ou des premières plages de longueur d'onde est déterminée au préalable par des essais.

3. Procédé selon une des revendications 1 à 2,
**caractérisée en ce**
**que** l'altération accélérée est effectuée par irradiation optique et/ou réchauffement ciblé et/ou alimentation ciblée des cellules solaires ou modules solaires pendant les phases d'altération.

4. Procédé selon la revendication 3,
**caractérisé en ce**
**que** l'irradiation optique des cellules solaires ou des modules solaires en vue de l'altération accélérée est effectuée seulement avec la lumière d'une ou plusieurs plages de longueur d'onde, qui sont limitées par rapport à une plage de longueur d'onde sensible des cellules solaires (4) ou des modules solaires et avec lesquels une accélération maximale du processus d'altération des cellules solaires (4) ou des modules solaires ou du composant des cellules solaires (4) ou modules solaires est obtenue.

5. Procédé selon la revendication 3 ou 4,
**caractérisé en ce**
**que** l'irradiation optique des cellules solaires (4) ou des modules solaires en vue de l'altération accélérée est variée en intensité, afin d'étudier une influence de l'intensité sur la vitesse d'altération.

6. Procédé selon une des revendications 3 à 5,
**caractérisé en ce**
**que** l'alimentation ciblée des cellules solaires (4) ou des modules solaires a lieu au moyen d'un contact électrique et d'une source de courant régulable (3).

7. Procédé selon une des revendications 3 à 6,
**caractérisé en ce**
**que** le réchauffement ciblé des cellules solaires (4) ou des modules solaires est effectué au moyen d'une irradiation infrarouge et/ou un flux d'air tempéré et/ou au moyen d'éléments de chauffage planaires ou d'éléments de Peltier.

8. Procédé selon une des revendications 1 à 7,
**caractérisé en ce**
**que** l'irradiation optique des cellules solaires (4) ou des modules solaires est effectuée pendant une ou plusieurs phases de mesure avec des DELs.

9. Procédé selon une des revendications 1 à 8,
**caractérisé en ce**
**que** le paramètre est déterminé par un procédé d'imagerie, dans lequel une image de la surface des cellules solaires (4) ou modules solaires est détectée.

10. Procédé selon une des revendications 1 à 8,
**caractérisé en ce**
**que** le paramètre est déterminé par la mesure d'un courant de court-circuit des cellules solaires (4) en présence d'au moins une intensité de l'irradiation optique pendant une ou plusieurs phases de mesure.

11. Dispositif de contrôle de cellules solaires ou de modules solaires avec le procédé de la revendication 1, qui présente
- une chambre d'essai (5) comportant
-- un dispositif d'éclairage DEL pour un éclairage homogène des cellules solaires (4) ou modules solaires renfermés dans la chambre d'essai, qui est configuré comme une source lumineuse plate et présente des DELs avec des longueurs d'onde différente, qui peuvent être commandées en au moins deux groupes (1, 2) de DELs, desquels un premier groupe (1) émet une lumière d'une plage de longueur d'onde plus large qu'un deuxième groupe (2), et
-- un dispositif de thermorégulation régulable pour le réchauffement ou le refroidissement homogène des cellules solaires (4) ou des modules solaires,
- un dispositif de mesure, qui comprend aussi une source de courant et/ou un collecteur de courant (3) pour les cellules solaires (4) ou les modules solaires, et est configuré pour mesurer au moins un paramètre des cellules solaires (4) ou des modules solaires, sur lequel une altération des cellules solaires (4) ou modules solaires d'un composant des cellules solaires (4) ou des modules solaires peut être quantifié, et
- un dispositif de commande (7) pour le dispositif d'éclairage DEL, qui présente le dispositif de thermorégulation et le dispositif de mesure,
dans lequel le dispositif de commande (7) est configuré de telle sorte qu'il commande le dispositif d'éclairage DEL, le dispositif de thermorégulation et le dispositif de mesure pour mettre en oeuvre les phases d'altération et de mesure du procédé selon une des revendications précédentes.

12. Dispositif selon la revendication 11,
**caractérisé en ce**
**que** le premier groupe (1) de DELs émet une lumière d'une plage de longueur d'onde, qui favorise une altération accélérée des cellules solaires (4) ou des modules solaires.

13. Dispositif selon la revendication 11,
**caractérisé en ce**
**que** le premier groupe (1) de DELs émet une lumière d'une plage de longueur d'onde d'au moins 500 à 1000 nm.

14. Dispositif selon une des revendications 11 à 13,
**caractérisé en ce**
**que** le deuxième groupe (2) de DELs émet une lumière d'une plage de longueur d'onde, dans laquelle un effet d'altération intéressant des cellules solaires (4) ou des modules solaires ou du composant des cellules solaires (4) ou des modules solaires est décelable sur la base d'un paramètre mesuré avec le dispositif de mesure avec une sensibilité maximale.
